(19) Europäisches Patentamt
European Patent Office
Office européen des brevets

(11) **EP 2 360 819 B1**

(12) **EUROPÄISCHE PATENTSCHRIFT**

(45) Veröffentlichungstag und Bekanntmachung des Hinweises auf die Patenterteilung:
**06.06.2012 Patentblatt 2012/23**

(21) Anmeldenummer: **10153349.5**

(22) Anmeldetag: **11.02.2010**

(51) Int Cl.:
*H02M 1/12* (2006.01)   *H02M 7/483* (2007.01)

(54) **Aktive Dämpfung von Stromharmonischen in einem Mehrstufen-Umrichter**

Active damping of current harmonics in a multi-level converter

Amortissement actif des harmoniques de courant dans un convertisseur multiniveau

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**24.08.2011 Patentblatt 2011/34**

(73) Patentinhaber: **ABB Schweiz AG**
**5400 Baden (CH)**

(72) Erfinder:
 • **Winkelnkemper, Manfred**
  **5408 Ennetbaden (CH)**
 • **Korn, Arthur**
  **5400 Baden (CH)**

(74) Vertreter: **ABB Patent Attorneys**
**C/o ABB Schweiz AG**
**Intellectual Property (CH-LC/IP)**
**Brown Boveri Strasse 6**
**5400 Baden (CH)**

(56) Entgegenhaltungen:
**WO-A1-2007/023064    WO-A1-2008/067784**
**WO-A2-2007/033852**

 • **ANTONIOS ANTONOPOULOS ET AL: "On dynamics and voltage control of the Modular Multilevel Converter" POWER ELECTRONICS AND APPLICATIONS, 2009. EPE '09. 13TH EUROPEAN CONFERENCE ON, IEEE, PISCATAWAY, NJ, USA, 8. September 2009 (2009-09-08), Seiten 1-10, XP031541295 ISBN: 978-1-4244-4432-8**

**Beschreibung**

**Technisches Gebiet**

Die Erfindung bezieht sich auf das Gebiet der Leistungselektronik. Sie geht aus von einem Verfahren zum Berieb einer Umrichterschaltung gemäss dem Oberbegriff der unabhängigen Ansprüche.

**Stand der Technik**

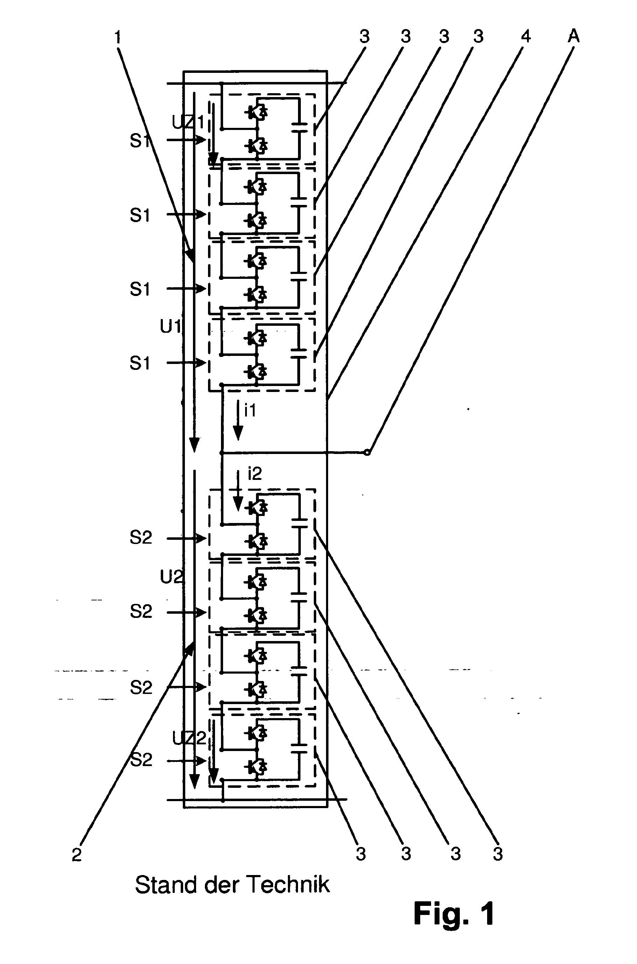

Umrichterschaltungen werden heute in einer Vielzahl von Anwendungen Eingesetzt. Eine in der Spannung besonders einfach zu skalierende Umrichterschaltung ist in der WO 2007/023064 A1 angegeben. In Fig. 1 ist eine solche Umrichterschaltung nach dem Stand der Technik dargestellt, wobei in Fig. 1 der Übersichtlichkeit halber nur ein Phasenbaustein der Umrichterschaltung dargestellt ist. Darin weist die Umrichterschaltung für jede Phase einen Phasenbaustein auf, wobei jeder Phasenbaustein ein erstes und ein zweites Teilumrichtersystem umfasst und die Teilumrichtersysteme seriell miteinander verbunden sind. Der Verbindungspunkt der beiden in Serie geschalteten Teilumrichtersysteme bildet einen Ausgangsanschluss beispielsweise für eine elektrische Last. Jedes Teilumrichtersystem umfasst mindestens eine zweipolige Schaltzelle, wobei im Falle mehrerer Schaltzellen eines Teilumrichtersystems diese Schaltzellen seriell miteinander verbunden sind. Jede zweipolige Schaltzelle weist ansteuerbare bidirektionale Leistungshalbleiterschalter mit gesteuerter unidirektionaler Stromführungsrichtung und einen kapazitiven Energiespeicher auf. In Fig. 1 weist jede Schaltzelle zwei in Serie geschaltete ansteuerbare bidirektionale Leistungshalbleiterschalter mit gesteuerter unidirektionaler Stromführungsrichtung und einen zu der Serienschaltung der Leistungshalbleiterschalter parallel geschalteten kapazitiven Energiespeicher aufweist. Eine gattungsgemässe Umrichterschallung ist auch in der WO 2007133852 A2 angegeben.

Da die Umrichterschaltung nach der WO 2007/023064 A1 oder nach der WO 2007/33852 A2 schwach gedämpfte Schwingkreise, bestehend aus zwei oder mehr Phasenbausteinen, enthält, müssen die darin auftretenden Schwingungen in den Strömen durch das erste und zweite Teilumrichtersystem regelungstechnisch gedämpft werden. In der WO 2007/33852 A2 ist dazu ein Steuerverfahren angegeben, welches auf dem Prinzip der frei wählbaren Zeitspannen für Schalthandlungen der ansteuerbaren ansteuerbare bidirektionale Leistungshalbleiterschalter der Schaltzellen des ersten und zweiten Teilumrichtersystems folgt.

In der WO 2008/067784 A1 sowie in A. Antonopoulos et al, "On dynamics and voltage control of the Modular Multilevel Converter". IPE 2009 ist ferner jeweils ein gattungsgemässes Verfahren zum Betrieb einer Umrichterschaltung angegeben.

**Darstellung der Erfindung**

Aufgabe der Erfindung ist es, ein bezüglich des Standes der Technik weiterentwickeltes und alternatives Verfahren zum Betrieb einer Umrichterschaltung anzugeben, mittels welchem unerwünschte Schwingungen und Verzerrungen in Strömen erster und zweiter Teilumrichter-systeme der Umrichterschaltung aktiv gedämpft werden können.

Diese Aufgabe wird durch die Merkmale des Anspruchs 1 bzw. 3 bzw. 6 gelöst. In den abhängigen Ansprüchen sind vorteilhafte Weiterbildungen der Erfindung angegeben.

Die Umrichterschaltung weist mindestens zwei Phasenbausteine auf, jeder Phasenbaustein umfasst ein erstes und ein zweites Teilumrichtersystem und für jeden Phasenbaustein sind die Teilumrichtersysteme seriell miteinander verbunden. Jedes Teilumrichtersystem umfasst mehrere in Serie geschaltete zweipolige Schaltzellen und jede Schaltzelle weist ansteuerbare bidirektionale Leistungshalbleiterschalter mit gesteuerter unidirektionaler Stromführungsrichtung und einen kapazitiven Energiespeicher auf. Nach dem erfindungsgemässen Verfahren werden die Leistungshalbleiterschalter der Schaltzellen des ersten Teilumrichtersystems mittels eines Ansteuersignals und die Leistungshalbleiterschalter der Schaltzellen des zweiten Teilumrichtersystems mittels eines weiteren Ansteuersignals angesteuert. Ferner wird bei für das erste Teilumrichtersystem das Ansteuersignal aus einem Referenzsignal bezüglich der Spannung über dem ersten Teilumrichtersystem gebildet, und für das zweite Teilumrichtersystem wird das weitere Ansteuersignal aus einem Referenzsignal bezüglich der Spannung über dem zweiten Teilumrichtersystem gebildet. Erfindungsgemäss wird das Ansteuersignal zusätzlich aus einem Dämpfungssignal bezüglich des ersten Teilumrichtersystems gebildet, wobei das Dämpfungssignal aus einem gemessenen Strom durch das erste Teilumrichtersystem und einem vorgebbaren Widerstandswert gebildet wird. Desweiteren das weitere Ansteuersignal zusätzlich aus einem Dämpfungssignal bezüglich des zweiten Teilumrichtersystems gebildet, wobei das Dämpfungssignal aus einem gemessenen Strom durch das zweite Teilumrichtersystem und dem vorgebbaren Widerstandswert gebildet wird.

Das jeweilige Dämpfungssignal entspricht in seiner Wirkung einem Spannungsabfall über einem ohmschen Widerstand im zugehörigen Teilumrichtersystem und dämpft damit die Ströme durch das jeweils zugehörige Teilumrichtersystem in gewünschter Weise.

In einer weiteren Ausführungsform der Erfindung wird das Dämpfungssignal bezüglich des ersten Teilumrichtersystems zusätzlich aus einem vorgebbaren Referenzstrom durch das erste Teilumrichtersystem gebildet. Das Dämpfungssignal bezüglich des zweiten Teilumrichtersystems wird zusätzlich aus einem vorgebbaren Referenzstrom durch das zweite Teilumrichtersystem gebildet. Durch die Vorgabe eines Referenzstromes bei der Bildung des jeweiligen Dämpfungssignals ist es vorteilhaft möglich, dass gezielt bestimmte Schwingungsanteile-der Ströme durch das jeweilige Teilumrichtersystem gedämpft werden.

Bei einer alternativen Ausführungsform der Erfindung wird für das erste Teilumrichtersystem das Ansteuersignal aus einem in einer zentralen Berechnungseinheit erzeugten Referenzsignal bezüglich der zugehörigen Schaltzelle des ersten Teilumrichtersystems gebildet. Für jede Schaltzelle des ersten Teilumrichtersystems ist eine lokale Berechnungseinheit vorgesehen, wobei das Referenzsignal bezüglich der zugehörigen Schaltzelle des ersten Teilumrichtersystems an die lokalen Berechnungseinheiten der Schaltzellen des ersten Teilumrichtersystems übermittelt wird. Das Ansteuersignal wird in jeder lokalen Berechnungseinheiten der Schaltzellen des ersten Teilumrichtersystems dann zusätzlich aus einem Dämpfungssignal bezüglich der zugehörigen Schaltzelle des ersten Teilumrichtersystems gebildet, wobei das Dämpfungssignal aus einem gemessenen Strom durch die zugehörige Schaltzelle des ersten Teilumrichtersystems und einem vorgebbaren Widerstandswert gebildet wird. Für das zweite Teilumrichtersystem wird das weitere Ansteuersignal aus einem in der zentralen Berechnungseinheit erzeugten Referenzsignal bezüglich der zugehörigen Schaltzelle des zweiten Teilumrichtersystems gebildet wird. Desweiteren ist für jede Schaltzelle des zweiten Teilumrichtersystems eine lokale Berechnungseinheit vorgesehen, wobei das Referenzsignal bezüglich der zugehörigen Schaltzelle des zweiten Teilumrichtersystems an die lokalen Berechnungseinheiten der Schaltzellen des zweiten Teilumrichtersystems übermittelt wird. Ferner wird dann das weitere Ansteuersignal in jeder lokalen Berechnungseinheiten der Schaltzellen des zweiten Teilumrichtersystems zusätzlich aus einem Dämpfungssignal bezüglich der zugehörigen Schaltzelle des zweiten Teilumrichtersystems gebildet, wobei das Dämpfungssignal aus einem gemessenen Strom durch die zugehörige Schaltzelle des zweiten Teilumrichtersystems und dem vorgebbaren Widerstandswert gebildet wird.

Durch die vorstehend genannte Alternative, findet die Dämpfung der Ströme durch die Teilumrichtersysteme mit Vorteil in den Schaltzellen statt. Das jeweilige Dämpfungssignal entspricht in seiner Wirkung einem Spannungsabfall über einem ohmschen Widerstand in jeder Schaltzelle, wobei die Gesamtwirkung einer Serienschaltung von ohmschen Widerständen entspricht, wodurch die Ströme durch die jeweiligen Schaltzellen des zugehörigen Teilumrichtersystems in gewünschter Weise gedämpft werden. Durch die lokale Messung der Ströme durch die Schaltzellen kann die Redundanz und damit die Verfügbarkeit der Dämpfung selbst bei Ausfall einer Strommessung beispielsweise in einer Schaltzelle weiterhin gewährleistet werden. Durch die lokale Bildung des Ansteuersignals entfällt ferner die gängige Übermittlung des Ansteuersignals zu den einzelnen Schaltzellen.

In einer weiteren Ausführungsform der Erfindung wird das jeweilige Dämpfungssignal bezüglich der zugehörigen Schaltzelle des ersten Teilumrichtersystems zusätzlich aus einem vorgebbaren Referenzstrom durch die zugehörige Schaltzelle des ersten Teilumrichtersystems gebildet, und das jeweilige Dämpfungssignal bezüglich der zugehörigen Schaltzelle des zweiten Teilumrichtersystems wird zusätzlich aus einem vorgebbaren Referenzstrom durch die zugehörige Schaltzelle des zweiten Teilumrichtersystems gebildet. Neben den vorstehend bereits genannten Vorteilen ist es mittels der Vorgabe eines Referenzstromes bei der Bildung des jeweiligen Dämpfungssignals vorteilhaft möglich, dass gezielt bestimmte Schwingungsanteile der Ströme durch die Schaltzellen des zugehörigen Teilumrichtersystems gedämpft werden.

Bei einer weiteren Alternative der Erfindung wird für das erste Teilumrichtersystem das Ansteuersignal aus einem in einer zentralen Berechnungseinheit erzeugten Dämpfungsreferenzsignal bezüglich der Spannung über dem ersten Teilumrichtersystem gebildet, wobei das Dämpfungsreferenzsignal bezüglich der Spannung über dem ersten Teilumrichtersystem aus einem vorgebbaren Referenzstrom durch das erste Teilumrichtersystem, aus einem vorgebbaren Widerstandswert und aus einem Referenzsignal bezüglich der Spannung über dem ersten Teilumrichtersystem gebildet wird. Für jede Schaltzelle des ersten Teilumrichtersystems ist dann eine lokale Berechnungseinheit vorgesehen, wobei das Dämpfungsreferenzsignal bezüglich der Spannung über dem ersten Teilumrichtersystem an die lokalen Berechnungseinheiten der Schaltzellen des ersten Teilumrichtersystems übermittelt wird. Das Ansteuersignal in jeder lokalen Berechnungseinheiten der Schaltzellen des ersten Teilumrichtersystems wird zusätzlich aus einem Dämpfungssignal bezüglich der zugehörigen Schaltzelle des ersten Teilumrichtersystems gebildet, wobei das Dämpfungssignal aus einem gemessenen Strom durch die zugehörige Schaltzelle des ersten Teilumrichtersystems und aus einem vorgebbaren weiteren Widerstandswert gebildet wird. Zudem wird für das zweite Teilumrichtersystem das weitere Ansteuersignal aus einem in der zentralen Berechnungseinheit erzeugten Dämpfungsreferenzsignal bezüglich der Spannung über dem zweiten Teilumrichtersystem gebildet, wobei das Dämpfungsreferenzsignal bezüglich der Spannung über dem zweiten Teilumrichtersystem aus einem vorgebbaren Referenzstrom durch das zweite Teilumrichtersystem, aus dem vorgebbaren Widerstandswert und aus einem Referenzsignal bezüglich der Spannung über dem-zweiten Teilumrichtersystem gebildet wird. Desweiteren ist für jede Schaltzelle des zweiten Teilumrichtersystems dann eine lokale Berechnungseinheit vorgesehen, wobei das Dämpfungsreferenzsignal bezüglich der Spannung über dem zweiten Teilumrichtersystem an die lokalen Berechnungseinheiten der Schaltzellen des zweiten Teilumrichtersystems übermittelt wird. Ferner wird das weitere Ansteuersignal in jeder lokalen Berechnungseinheiten der Schaltzellen des zweiten Teilumrichtersystems zusätzlich aus einem Dämpfungssignal bezüglich der zugehörigen Schaltzelle des zweiten Teilumrichtersystems gebildet, wobei das Dämpfungssignal aus einem gemessenen Strom durch die zugehörige Schaltzelle des zweiten Teilumrichtersystems und dem vorgebbaren weiteren Widerstandswert gebildet wird. Auch mit dieser Alternative der Erfindung können damit selektiv bestimmte Schwingungsanteile der Ströme durch die Schaltzellen des zugehörigen Teilumrichtersystems gedämpft werden. Zudem wird der Referenzstrom vorteilhaft nicht an die lokalen Berechnungseinheiten übertragen.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

## Kurze Beschreibung der Zeichnungen

Es zeigen:

Fig. 1    eine Ausführungsform einer Umrichterschaltung nach dem Stand der Technik,

Fig. 2    eine erste Ausführungsform einer Vorrichtung zur Durchführung des erfin- dungsgemässen Verfahrens zum Betrieb einer Umrichterschaltung,

Fig. 3    eine zweite Ausführungsform einer Vorrichtung zur Durchführung des erfin- dungsgemässen Verfahrens zum Betrieb einer Umrichterschaltung,

Fig. 4    eine dritte Ausführungsform einer Vorrichtung zur Durchführung des erfin- dungsgemässen Verfahrens zum Betrieb einer Umrichterschaltung,

Fig. 5    eine vierte Ausführungsform einer Vorrichtung zur Durchführung des erfin- dungsgemässen Verfahrens zum Betrieb einer Umrichterschaltung und

Fig. 6    eine fünfte Ausführungsform einer Vorrichtung zur Durchführung des erfin- dungsgemässen Verfahrens zum Betrieb einer Umrichterschaltung.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

## Wege zur Ausführung der Erfindung

In Fig.1 ist, wie eingangs bereits erwähnt, eine Ausführungsform einer Umrichterschaltung nach dem Stand der Technik gezeigt. Die Umrichterschaltung weist allgemein mindestens zwei Phasenbausteine 4 auf, wobei jeder Phasenbaustein 4 ein erstes und ein zweites Teilumrichtersystem 1, 2 umfasst und für jeden Phasenbaustein 4 die Teilumrichtersysteme 1, 2 seriell miteinander verbunden sind. Jedes Teilumrichtersystem 1, 2 umfasst mehrere in Serie geschaltete zweipolige Schaltzellen 3 und jede Schaltzelle 3 weist ansteuerbare bidirektionale Leistungshalbleiterschalter mit gesteuerter unidirektionaler Stromführungsrichtung und einen kapazitiven Energiespeicher auf. Es ist zudem möglich, dass jedes Teilumrichtersystem 1, 2 eine Induktivität seriell zu der Serienschaltung der Schaltzellen 3 aufweist. Der ansteuerbare Leistungshalbleiterschalter der Schaltzellen 3 der Teilumrichtersysteme 1, 2 ist insbesondere als Abschaltthyristor (GTO - Gate Turn-Off Thyristor) oder als integrierter Thyristor mit kommutierter Ansteuerelektrode (IGCT - Integrated Gate Commutated Thyristor) mit jeweils einer antiparallel geschalteten Diode ausgebildet. Es ist aber auch denkbar, einen ansteuerbaren Leistungshalbleiterschalter beispielsweise als Leistungs-MOSFET mit zusätzlich antiparallel geschalteter Diode oder als Bipolartransistor mit isoliert angeordneter Gateelektrode (IGBT) mit zusätzlich antiparallel geschalteter Diode auszubilden. Vorzugsweise entspricht die Anzahl Schaltzellen 3 des ersten Teilumrichtersystems 1 der Anzahl Schaltzellen 3 des zweiten Teilumrichtersystems 2.

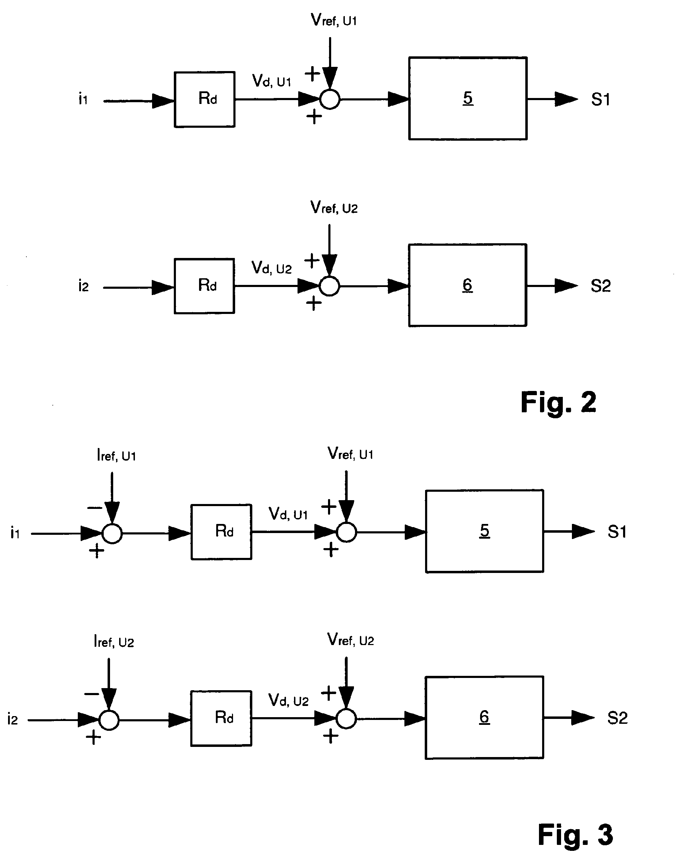

In Fig. 2 ist eine erste Ausführungsform einer Vorrichtung zur Durchführung des erfindungsgemässen Verfahrens zum Betrieb einer Umrichterschaltung. Verfahrensmässig werden die Leistungshalbleiterschalter der Schaltzellen 3 des ersten Teilumrichtersystems 1 mittels eines Ansteuersignals S1 und die Leistungshalbleiterschalter der Schaltzellen 3 des zweiten Teilumrichtersystems 2 mittels eines weiteren Ansteuersignals S2 angesteuert werden. Für das erste Teilumrichtersystem 1 wird das Ansteuersignal S1 aus einem Referenzsignal $V_{ref,\ U1}$ bezüglich der Spannung U1 über dem ersten Teilumrichtersystem 1 gebildet. Für das zweite Teilumrichtersystem 2 wird das weitere Ansteuersignal S2 aus einem Referenzsignal $V_{ref, U2}$ bezüglich der Spannung U2 über dem zweiten Teilumrichtersystem 2 gebildet. Gemäss Fig. 2 wird das Ansteuersignal S1 nun zusätzlich aus einem Dämpfungssignal $V_{d, U1}$ bezüglich des ersten Teilumrichtersystems 1 gebildet, wobei das Dämpfungssignal $V_{d, U1}$ aus einem gemessenen Strom i1 durch das erste Teilumrichtersystem 1 und einem vorgebbaren Widerstandswert $R_d$ gebildet wird. Die Bildung des Dämpfungssignals $V_{d, U1}$ erfolgt nach folgender Formel:

$$V_{d,U1} = i1 \cdot R_d \qquad [1]$$

Das weitere Ansteuersignal S2 wird gemäss Fig. 2 zusätzlich aus einem Dämpfungssignal $V_{d, U2}$ bezüglich des zweiten Teilumrichtersystems 2 gebildet, wobei das Dämpfungssignal $V_{d, U2}$ aus einem gemessenen Strom i2 durch das zweite Teilumrichtersystem 2 und dem vorgebbaren Widerstandswert $R_d$ gebildet wird. Die Bildung des Dämpfungssignals $V_{d, U2}$ erfolgt nach folgender Formel:

$$V_{d,U2} = i2 \cdot R_d \qquad [2]$$

Das jeweilige Dämpfungssignal $V_{d, U1}$, $V_{d, U2}$ entspricht in seiner Wirkung einem Spannungsabfall über einem ohmschen Widerstand im zugehörigen Teilumrichtersystem 1, 2 und dämpft damit die Ströme i1, i2 durch das jeweils zugehörige Teilumrichtersystem 1, 2 in gewünschter Weise.

Gemäss Fig. 2 wird die Summe aus dem Dämpfungssignal $V_{d, U1}$ bezüglich des ersten Teilumrichtersystems 1 und dem Referenzsignal $V_{ref, U1}$ bezüglich der Spannung U1 über dem ersten Teilumrichtersystem 1 gebildet und auf einen Modulator 5 gegeben, derdaraus das Ansteuersignal S1 generiert. Zudem wird nach Fig. 2 die Summe aus dem Dämpfungssignal $V_{d, U2}$ bezüglich des zweiten Teilumrichtersystems 2 und dem Referenzsignal $V_{ref, U2}$ bezüglich der Spannung U2 über dem zweiten Teilumrichtersystem 2 gebildet und auf einen Modulator 6 gegeben, der daraus das_ weitere Ansteuersignal S2 generiert. Als Modulator 5, 6 in Fig. 2, aber auch in den Ausführungsformen gemäss Fig. 3 bis Fig. 5 sind sämtliche Modulatoren, wie beispielsweise Pulsweitenmodulatoren, Modulatoren basierend auf Trägerverfahren, Raumzeigermodulatoren oder Modulatoren mit Hysteresecharakteristik denkbar.

Vorzugsweise wird das Dämpfungssignal $V_{d, U1}$ bezüglich des ersten Teilumrichtersystems 1 gemäss einer zweiten Ausführungsform einer Vorrichtung zur Durchführung des erfindungsgemässen Verfahrens nach Fig. 3 zum Betrieb einer Umrichterschaltung zusätzlich aus einem vorgebbaren Referenzstrom $I_{ref, U1}$ durch das erste Teilumrichtersystem 1 gebildet. Die Bildung des Dämpfungssignals $V_{d, U1}$ erfolgt nach folgender Formel:

$$V_{d,U1} = (i1 - I_{ref,U1}) \cdot R_d \qquad [3]$$

Nach Fig. 3 wird das Dämpfungssignal $V_{d, U2}$ bezüglich des zweiten Teilumrichtersystems 2 zusätzlich aus einem vorgebbaren Referenzstrom $I_{ref, U2}$ durch das zweite Teilumrichtersystem 2 gebildet. Die Bildung des Dämpfungssignals $V_{d, U2}$ erfolgt nach folgender Formel:

$$V_{d,U2} = (i1 - I_{ref,U2}) \cdot R_d \qquad [4]$$

Die Bildung des Ansteuersignals S1 und des weiteren Ansteuersignals S2 erfolgt dann gemäss Fig. 3 entsprechend wie in Fig. 2.

Durch die Vorgabe eines Referenzstromes $I_{ref, U1}$, $I_{ref, U2}$ bei der Bildung des jeweiligen Dämpfungssignals $V_{d, U1}$, $V_{d, U2}$ ist es vorteilhaft möglich, dass gezielt bestimmte Schwingungsanteile der Ströme i1, i2 durch das jeweilige Teilumrichtersystem gedämpft werden.

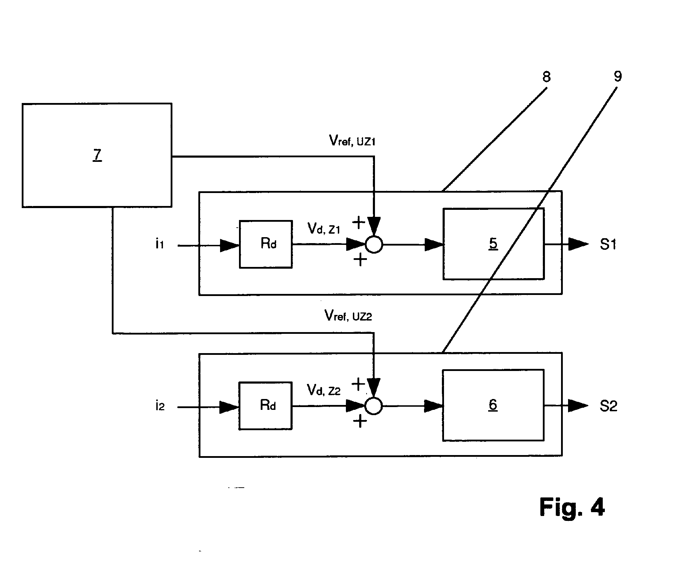

In Fig. 4 ist eine dritte Ausführungsform einer Vorrichtung zur Durchführung des erfindungsgemässen Verfahrens zum Betrieb einer Umrichterschaltung gezeigt, die eine Alternative zu den Ausführungsformen nach Fig. 2 und Fig. 3 darstellt. Gemäss Fig. 4 wird für das erste Teilumrichtersystem 1 das Ansteuersignal S1 aus einem in einer zentralen Berechnungseinheit 7 erzeugten Referenzsignal $V_{ref, UZ1}$ bezüglich der zugehörigen Schaltzelle 3 des ersten Teilumrichtersystems 1 gebildet. Für jede Schaltzelle 3 des ersten Teilumrichtersystems 1 ist dann eine lokale Berechnungseinheit 8 vorgesehen, wobei das Referenzsignal $V_{ref, UZ1}$ bezüglich der zugehörigen Schaltzelle 3 des ersten Teilumrichtersystems 1 an die lokalen Berechnungseinheiten 8 der Schaltzellen 3 des ersten Teilumrichtersystems 1 übermittelt wird. Ferner wird das Ansteuersignal S1 in jeder lokalen Berechnungseinheit 8 der Schaltzellen 3 des ersten Teilumrichtersystems 1 zusätzlich aus einem Dämpfungssignal $V_{d, Z1}$ bezüglich der zugehörigen Schaltzelle 3 des ersten Teilumrichtersystems 1 gebildet, wobei das Dämpfungssignal $V_{d, Z1}$ aus einem gemessenen Strom i1 durch die zugehörige Schaltzelle 3 des ersten Teilumrichtersystems 1 und einem vorgebbaren Widerstandswert $R_d$ gebildet wird. Die Bildung des Dämpfungssignal $V_{d, Z1}$ erfolgt nach folgender Formel:

$$V_{d, Z1} = i1 \cdot R_d \qquad [5]$$

Gemäss Fig. 4 wird für das zweite Teilumrichtersystem 2 das weitere Ansteuersignal S2 aus einem in der zentralen Berechnungseinheit 7 erzeugten Referenzsignal $V_{ref, UZ2}$ bezüglich der zugehörigen Schaltzelle 3 des zweiten Teilumrichtersystems 2 gebildet. Für jede Schaltzelle 3 des zweiten Teilumrichtersystems 2 eine lokale Berechnungseinheit 9 vorgesehen ist, wobei das Referenzsignal $V_{ref, UZ2}$ bezüglich der zugehörigen Schaltzelle 3 des zweiten Teilumrichtersystems 2 an die lokalen Berechnungseinheiten 9 der Schaltzellen 3 des zweiten Teilumrichtersystems 2 übermittelt wird. Ferner wird das weitere Ansteuersignal S2 in jeder lokalen Berechnungseinheit 9 der Schaltzellen 3 des zweiten Teilumrichtersystems 2 zusätzlich aus einem Dämpfungssignal $V_{d, Z2}$ bezüglich der zugehörigen Schaltzelle 3 des zweiten Teilumrichtersystems 2 gebildet, wobei das Dämpfungssignal $V_{d, Z2}$ aus einem gemessenen Strom i2 durch die zugehörige Schaltzelle 3 des zweiten Teilumrichtersystems 2 und dem vorgebbaren Widerstandswert $R_d$ gebildet wird. Die Bildung des Dämpfungssignal $V_{d, Z2}$ erfolgt nach folgender Formel:

$$V_{d, Z2} = i1 \cdot R_d \qquad [6]$$

Durch die vorstehend genannte Alternative nach Fig. 4, findet die Dämpfung der Ströme i1, i2 durch die Teilumrichtersysteme 1, 2 mit Vorteil in den Schaltzellen 3 statt. Das jeweilige Dämpfungssignal $V_{d, Z1}$, $V_{d, Z2}$ entspricht in seiner Wirkung einem Spannungsabfall über einem ohmschen Widerstand in jeder Schaltzelle 3, wobei die Gesamtwirkung einer Serienschaltung von ohmschen Widerständen entspricht, wodurch die Ströme i1, i2 durch die jeweiligen Schaltzellen 3 des zugehörigen Teilumrichtersystems 1, 2 in gewünschter Weise gedämpft werden. Durch die lokale Messung der Ströme i1, i2 durch die Schaltzellen 3 kann die Redundanz und damit die Verfügbarkeit der Dämpfung selbst bei Ausfall einer Strommessung beispielsweise in einer Schaltzelle 3 weiterhin gewährleistet werden. Durch die lokale Bildung des Ansteuersignals S1, S2 entfällt ferner die gängige Übermittlung des Ansteuersignals S1, S2 zu den einzelnen Schaltzellen 3 beispielsweise von einer zentralen oder übergeordneten Einheit.

Gemäss Fig. 4 wird die Summe aus dem Dämpfungssignal $V_{d, Z1}$ bezüglich der zugehörigen Schaltzelle 3 des ersten Teilumrichtersystems 1 und dem Referenzsignal $V_{ref, UZ1}$ bezüglich der zugehörigen Schaltzelle 3 des ersten Teilumrichtersystems 1 gebildet und auf einen Modulator 5 gegeben, der daraus das Ansteuersignal S1 generiert. Zudem wird nach Fig. 4 die Summe aus dem Dämpfungssignal $V_{d, Z2}$ bezüglich des zweiten Teilumrichtersystems 2 und dem Referenzsignal $V_{ref, UZ2}$ bezüglich der zugehörigen Schaltzelle 3 des zweiten Teilumrichtersystems 2 gebildet und auf einen Modulator 6 gegeben, der daraus das weitere Ansteuersignal S2 generiert.

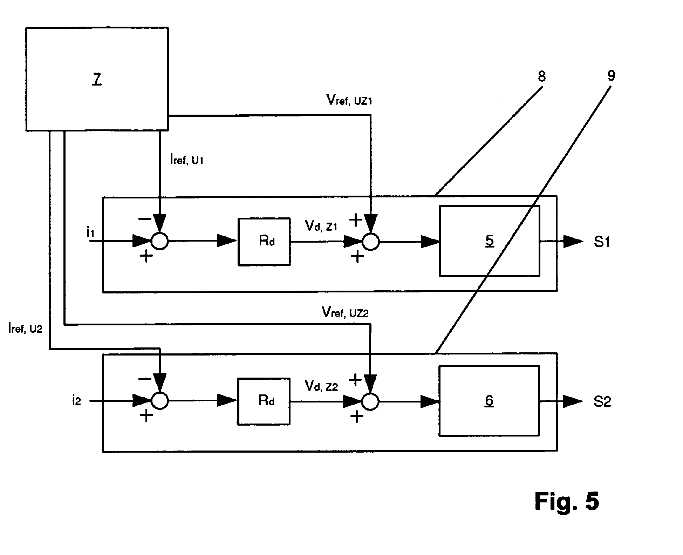

Vorzugsweise wird das Dämpfungssignal $V_{d, Z1}$ bezüglich der zugehörigen Schaltzelle 3 des ersten Teilumrichtersystems 1 gemäss einer vierten Ausführungsform einer Vorrichtung zur Durchführung des erfindungsgemässen Verfahrens nach Fig. 5 zum Betrieb einer Umrichterschaltung zusätzlich aus einem vorgebbaren Referenzstrom $I_{ref, U1}$ durch die zugehörige Schaltzelle 3 des ersten Teilumrichtersystems 1 gebildet. Der vorgebbare Referenzstrom $I_{ref, U1}$ durch die zugehörige Schaltzelle 3 des ersten Teilumrichtersystems 1 wird an die lokalen Berechnungseinheiten 8 der Schaltzellen 3 des ersten Teilumrichtersystems 1 übermittelt. Die Bildung des Dämpfungssignals $V_{d, Z1}$ erfolgt nach folgender Formel:

$$V_{d,Z1} = (i1 - I_{ref,U1}) \cdot R_d \qquad [7]$$

Nach Fig. 5 wird das jeweilige Dämpfungssignal $V_{d,Z2}$ bezüglich der zugehörigen Schaltzelle 3 des zweiten Teilumrichtersystems 2 zusätzlich aus einem vorgebbaren Referenzstrom $I_{ref,U2}$ durch die zugehörige Schaltzelle 3 des zweiten Teilumrichtersystems 2 gebildet. Der vorgebbare Referenzstrom $I_{ref,U2}$ durch die zugehörige Schaltzelle 3 des zweiten Teilumrichtersystems 2 wird an die lokalen Berechnungseinheiten 9 der Schaltzellen 3 des zweiten Teilumrichtersystems 1 übermittelt. Die Bildung des Dämpfungssignals $V_{d,Z2}$ erfolgt nach folgender Formel:

$$V_{d,Z2} = (i1 - I_{ref,U2}) \cdot R_d \qquad [8]$$

Die Bildung des Ansteuersignals S1 und des weiteren Ansteuersignals S2 erfolgt dann gemäss Fig. 5 entsprechend wie in Fig. 4.

Bevorzugt wird der Widerstandswert $R_d$ konstant oder zeitvariabel vorgegeben.

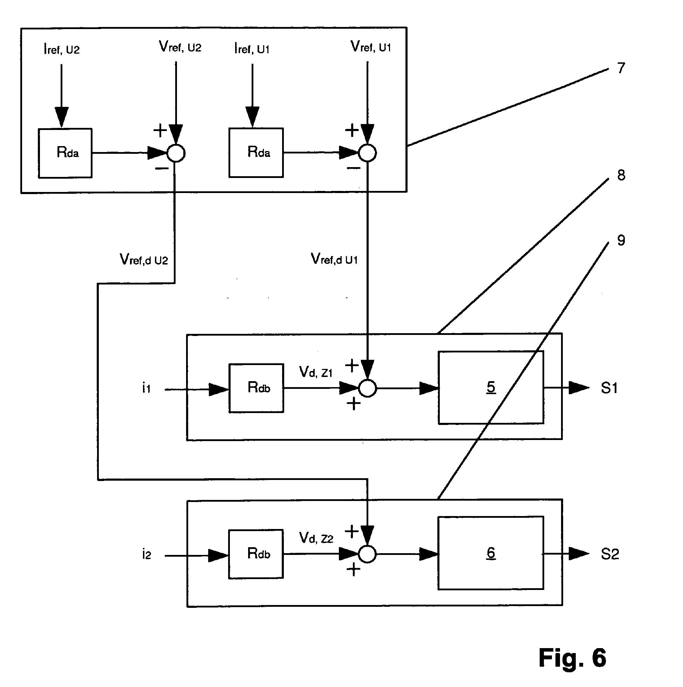

In Fig. 6 ist eine fünfte Ausführungsform einer Vorrichtung zur Durchführung des erfindungsgemässen Verfahrens zum Betrieb einer Umrichterschaltung gezeigt, die eine Alternative zu den Ausführungsformen nach Fig. 2, Fig. 3, Fig. 4 und Fig. 5 darstellt. Gemäss Fig. 6 wird für das erste Teilumrichtersystem 1 das Ansteuersignal S1 aus einem in einer zentralen Berechnungseinheit 7 erzeugten Dämpfungsreferenzsignal $V_{ref,d\,U1}$ bezüglich der Spannung U1 über dem ersten Teilumrichtersystem 1 gebildet, wobei das Dämpfungsreferenzsignal $V_{ref,d\,U1}$ bezüglich der Spannung U1 über dem ersten Teilumrichtersystem 1 aus einem vorgebbaren Referenzstrom $i_{ref,U1}$ durch das erste Teilumrichtersystem 1, aus einem vorgebbaren Widerstandswert $R_{da}$ und aus einem Referenzsignal $V_{ref,U1}$ bezüglich der Spannung U1 über dem ersten Teilumrichtersystem 1 gebildet wird. Die Bildung des Dämpfungssignals $V_{ref,d\,U1}$ erfolgt nach folgender Formel:

$$V_{ref,d\,U1} = V_{ref,U1} - (i_{ref,\,U1} \cdot R_{da}) \qquad [9]$$

Desweiteren ist für jede Schaltzelle 3 des ersten Teilumrichtersystem 1 gemäss Fig. 6 eine lokale Berechnungseinheit 8 vorgesehen, wobei das Dämpfungsreferenzsignal $V_{ref,d\,U1}$ bezüglich der Spannung U1 über dem ersten Teilumrichtersystem 1 an die lokalen Berechnungseinheiten 8 der Schaltzellen 3 des ersten Teilumrichtersystems 1 übermittelt wird. Das Ansteuersignal S1 wird in jeder lokalen Berechnungseinheiten 8 der Schaltzellen 3 des ersten Teilumrichtersystems 1 zusätzlich aus einem Dämpfungssignal $V_{d,Z1}$ bezüglich der zugehörigen Schaltzelle 3 des ersten Teilumrichtersystems 1 gebildet, wobei das Dämpfungssignal $V_{d,Z}$ aus einem gemessenen Strom i1 durch die zugehörige Schaltzelle 3 des ersten Teilumrichtersystems 1 und einem vorgebbaren weiteren Widerstandswert $R_{db}$ gebildet wird. Die Bildung des Dämpfungssignals $V_{d,Z1}$ erfolgt nach folgender Formel:

$$V_{d,Z1} = i1 \cdot R_{db} \qquad [10]$$

Gemäss Fig. 6 wird die Summe aus dem Dämpfungssignal $V_{d,Z1}$ bezüglich der zugehörigen Schaltzelle 3 des ersten Teilumrichtersystems 1 und dem Dämpfungsreferenzsignal $V_{ref,d\,U1}$ bezüglich der Spannung U1 über dem ersten Teilumrichtersystem 1 gebildet und auf einen Modulator 5 gegeben, der daraus das Ansteuersignal S1 generiert.

Nach Fig. 6 wird für das zweite Teilumrichtersystem 2 das weitere Ansteuersignal S2 aus einem in der zentralen Berechnungseinheit 9 erzeugten Dämpfungsreferenzsignal $V_{ref,d\,U2}$ bezüglich der Spannung U2 über dem zweiten Teilumrichtersystem 2 gebildet, wobei das Dämpfungsreferenzsignal $V_{ref,d\,U2}$ bezüglich der Spannung U2 über dem zweiten Teilumrichtersystem 2 aus einem vorgebbaren Referenzstrom $i_{ref,\,U2}$ durch das zweite Teilumrichtersystem 2, aus dem vorgebbaren Widerstandswert $R_{da}$ und aus einem Referenzsignal $V_{ref,\,U2}$ bezüglich der Spannung U2 über dem zweiten Teilumrichtersystem 2 gebildet wird. Die Bildung des Dämpfungssignals $V_{ref,d\,U2}$ erfolgt nach folgender Formel:

$$V_{ref,d\ U2} = V_{ref,U2} - (i_{ref,\ U2} \cdot R_{da}) \quad [11]$$

Gemäss Fig. 6 ist für jede Schaltzelle 3 des zweiten Teilumrichtersystem 2 eine lokale Berechnungseinheit 9 vorgesehen, das Dämpfungsreferenzsignal $V_{ref,d\,U2}$ bezüglich der Spannung U2 über dem zweiten Teilumrichtersystem 2 an die lokalen Berechnungseinheiten 9 der Schaltzellen 3 des zweiten Teilumrichtersystems 2 übermittelt wird. Das weitere Ansteuersignal S2 wird gemäss Fig. 6 in jeder lokalen Berechnungseinheiten 9 der Schaltzellen 3 des zweiten Teilumrichtersystems 2 zusätzlich aus einem Dämpfungssignal $V_{d,\,Z2}$ bezüglich der zugehörigen Schaltzelle 3 des zweiten Teilumrichtersystems 2 gebildet, wobei das Dämpfungssignal $V_{d,\,Z2}$ aus einem gemessenen Strom i2 durch die zugehörige Schaltzelle 3 des zweiten Teilumrichtersystems 2 und dem vorgebbaren weiteren Widerstandswert $R_{db}$ gebildet wird. Die Bildung des Dämpfungssignals $V_{d,\,Z2}$ erfolgt nach folgender Formel:

$$V_{d,\,Z2} = i2 \cdot R_{db} \quad [12]$$

Gemäss Fig. 6 wird die Summe aus dem Dämpfungssignal $V_{d,\,Z2}$ bezüglich der zugehörigen Schaltzelle 3 des zweiten Teilumrichtersystems 2 und dem Dämpfungsreferenzsignal $V_{ref,d\,U2}$ bezüglich der Spannung U2 über dem zweiten Teilumrichtersystem 2 gebildet und auf einen Modulator 6 gegeben, der daraus dann das weitere Ansteuersignal S2 generiert.

Auch mit dieser Alternative der Erfindung nach Fig. 6 können selektiv bestimmte Schwingungsanteile der Ströme i1, i2 durch die Schaltzellen 3 des zugehörigen Teilumrichtersystems 1, 2 gedämpft werden. Zudem wird der jeweilige Referenzstrom $i_{ref,\,U1}$, $i_{ref,\,U2}$ vorteilhaft nicht an die lokalen Berechnungseinheiten 8, 9 übertragen. Der Widerstandswert $R_{da}$ ist vorzugsweise so gewählt, dass er den Beitrag des jeweiligen Referenzstromes $i_{ref,\,U1}$, $i_{ref,\,U2}$ bezüglich des in der jeweils zugehörigen lokalen Berechnungseinheit 8, 9 gebildeten Dämpfungssignals $V_{d,\,Z1}$, $V_{d,\,Z2}$ aufhebt.

Vorzugsweise wird der Widerstandswert $R_{da}$ und der weitere Widerstandswert $R_{db}$ konstant oder zeitvariabel vorgegeben.

Es ist ganz allgemein auch denkbar, dass das jeweilige Dämpfungssignal $V_{d,\,U1}$ $V_{d,\,U2}$, $V_{d,\,Z1}$, $V_{d,\,Z2}$, nach einer allgemeinen Funktion vorgegeben wird, wobei eine solche Funktion dann beispielsweise einen konstanten Anteil, einen zeitvariablen Anteil, einen integralen Anteil, einen differentialen Anteil, einen Führungsanteil oder einen vorherigen Wert des jeweiligen Dämpfungssignals oder eine Kombination der vorstehend angegebenen Möglichkeiten enthalten kann.

**Bezugszeichenliste**

| | |
|---|---|
| 1 | erstes Teilumrichtersystem |
| 2 | zweites Teilumrichtersystem |
| 3 | Schaltzelle |
| 4 | Phasenbaustein |
| 5, 6 | Modulator |
| 7 | zentrale Berechnungseinheit |
| 8, 9 | lokale Berechnungseinheit |

**Patentansprüche**

1. Verfahren zum Betrieb einer Umrichterschaltung, wobei die Umrichterschaltung mindestens zwei Phasenbausteine (4) aufweist, jeder Phasenbaustein (4) ein erstes und ein zweites Teilumrichtersystem (1, 2) aufweist und für jeden Phasenbaustein (4) die Teilumrichtersysteme (1, 2) seriell miteinander verbunden sind, jedes Teilumrichtersystem (1, 2) mehrere in Serie geschaltete zweipolige Schaltzellen (3) umfasst und jede Schaltzelle (3)ansteuerbare bidirektionale Leistungshalbleiterschalter mit gesteuerter unidirektionaler Stromführungsrichtung und einen kapazitiven Energiespeicher aufweist,

   bei dem die Leistungshalbleiterschalter der Schaltzellen (3) des ersten Teilumrichtersystems (1) mittels eines Ansteuersignals (S1) und die Leistungshalbleiterschalter der Schaltzellen (3) des zweiten Teilumrichtersystems (2) mittels eines weiteren Ansteuersignals (S2) angesteuert werden,

   bei dem für das erste Teilumrichtersystem (1) das Ansteuersignal (S1) aus einem Referenzsignal ($V_{ref,\ U1}$) bezüglich der Spannung (U1) über dem ersten Teilumrichtersystem (1) gebildet wird, und

   bei dem für das zweite Teilumrichtersystem (2) das weitere Ansteuersignal (S2) aus einem Referenzsignal ($V_{ref,\ U2}$) bezüglich der Spannung (U2) über dem zweiten Teilumrichtersystem (2) gebildet wird,

   **dadurch gekennzeichnet,**

   **dass** das Ansteuersignal (S1) zusätzlich aus einem Dämpfungssignal ($V_{d,\ U1}$) bezüglich des ersten Teilumrichtersystems (1) gebildet wird, wobei das Dämpfungssignal ($V_{d,\ U1}$) aus einem gemessenen Strom (i1) durch das erste Teilumrichtersystem (1) und einem vorgebbaren Widerstandswert ($R_d$) gebildet wird, und

   **dass** das weitere Ansteuersignal (S2) zusätzlich aus einem Dämpfungssignal ($V_{d,\ U2}$) bezüglich des zweiten Teilumrichtersystems (2) gebildet wird, wobei das Dämpfungssignal ($V_{d,\ U2}$) aus einem gemessenen Strom (i2) durch das zweite Teilumrichtersystem (2) und dem vorgebbaren Widerstandswert ($R_d$) gebildet wird.

2. Verfahren nach Anspruch 1, **dadurch gekennzeichnet, dass** das Dämpfungssignal ($V_{d,\ U1}$) bezüglich des ersten Teilumrichtersystems (1) zusätzlich aus einem vorgebbaren Referenzstrom ($I_{ref,\ U1}$) durch das erste Teilumrichtersystem (1) gebildet wird, und

   dass das Dämpfungssignal ($V_{d,\ U2}$) bezüglich des zweiten Teilumrichtersystems (2) zusätzlich aus einem vorgebbaren Referenzstrom ($I_{ref,\ U2}$) durch das zweite Teilumrichtersystem (2) gebildet wird.

3. Verfahren zum Betrieb einer Umrichterschaltung, wobei die Umrichterschaltung mindestens zwei Phasenbausteine (4) aufweist, jeder Phasenbaustein (4) ein erstes und ein zweites Teilumrichtersystem (1, 2) aufweist und für jeden Phasenbaustein (4) die Teilumrichtersysteme (1, 2) seriell miteinander verbunden sind, jedes Teilumrichtersystem (1, 2) mehrere in Serie geschaltete zweipolige Schaltzellen (3) umfasst und jede Schaltzelle (3)ansteuerbare bidirektionale Leistungshalbteiterschalter mit gesteuerter unidirektionaler Stromführungsrichtung und einen kapazitiven Energiespeicher aufweist,

   bei dem die Leistungshalbleiterschalter der Schaltzellen (3) des ersten Teilumrichtersystems (1) mittels eines Ansteuersignals (S1) und die Leistungshalbleiterschalter der Schaltzellen (3) des zweiten Teilumrichtersystems (2) mittels eines weiteren Ansteuersignals (S2) angesteuert werden,

   **dadurch gekennzeichnet,**

   **dass** für das erste Teilumrichtersystem (1) das Ansteuersignal (S1) aus einem in einer zentralen Berechnungseinheit (7) erzeugten Referenzsignal ($V_{ref,\ UZ1}$) bezüglich der jeweils zugehörigen Schaltzelle (3) des ersten Teilumrichtersystems (1) gebildet wird,

   **dass** für jede Schaltzelle (3) des ersten Teilumrichtersystems (1) eine lokale Berechnungseinheit (8) vorgesehen ist und das Referenzsignal ($V_{ref,\ UZ1}$) bezüglich der jeweils zugehörigen Schaltzelle (3) des ersten Teilumrichtersystems (1) an die jeweils zugehörige lokale Berechnungseinheit (8) der jeweiligen Schaltzelle (3) des ersten Teilumrichtersystems (1) übermittelt wird,

   **dass** das Ansteuersignal (S1) in jeder lokalen Berechnungseinheit (8) der Schaltzellen (3) des ersten Teilumrichtersystems (1) zusätzlich aus einem Dämpfungssignal ($V_{d,\ Z1}$) bezüglich der zugehörigen Schaltzelle (3) des ersten Teilumrichtersystems (1) gebildet wird, wobei das Dämpfungssignal ($V_{d,\ Z1}$) aus einem gemessenen Strom (i1) durch die zugehörige Schaltzelle (3) des ersten Teilumrichtersystems (1) und einem vorgebbaren Widerstandswert ($R_d$) gebildet wird,

   **dass** für das zweite Teilumrichtersystem (2) das weitere Ansteuersignal (S2) aus einem in der zentralen Berechnungseinheit (7) erzeugten Referenzsignal ($V_{ref,\ UZ2}$) bezüglich der jeweils zugehörigen Schaltzelle (3) des zweiten Teilumrichtersystems (2) gebildet wird,

   **dass** für jede Schaltzelle (3) des zweiten Teitumrichtersystems (2) eine lokale Berechnungseinheit (9) vorgesehen ist und das Referenzsignal ($V_{ref,\ UZ2}$) bezüglich der zugehörigen Schaltzelle (3) des zweiten Teilumrichtersystems (2) an die jeweils zugehörige lokale Berechnungseinheit (9) der jeweiligen Schaltzelle (3) des zweiten Teilumrichtersystems (2) übermittelt wird.

**dass** das weitere Ansteuersignal (S2) in jeder lokalen Berechnungseinheit (9) der Schaltzellen (3) des zweiten Teilumrichtersystems (2) zusätzlich aus einem Dämpfungssignal ($V_{d, Z2}$) bezüglich der zugehörigen Schaltzelle (3) des zweiten Teilumrichtersystems (2) gebildet wird, wobei das Dämpfungssignal ($V_{d, Z2}$) aus einem gemessenen Strom (i2) durch die zugehörige Schallzelle (3) des zweiten Teilumrichtersystems (2) und dem vorgebbaren Widerstandswert ($R_d$) gebildet wird.

4.  Verfahren nach Anspruch 3, **dadurch gekennzeichnet, dass** das jeweilige Dämpfungssignal ($V_{d, Z1}$) bezüglich der zugehörigen Schaltzelle (3) des ersten Teilumrichtersystems (1) zusätzlich aus einem vorgebbaren Referenzstrom ($I_{ref, U1}$) durch die zugehörige Schaltzelle (3) des ersten Teilumrichtersystems (1) gebildet wird, und dass das jeweilige Dämpfungssignal ($V_{d, Z2}$) bezüglich der zugehörigen Schaltzellen (3) des zweiten Teilumrichtersystems (2) zusätzlich aus einem vorgebbaren Referenzstrom ($I_{ref, U2}$) durch die zugehörige Schaltzelle (3) des zweiten Teilumrichtersystems (2) gebildet wird.

5.  Verfahren nach einem der Ansprüche 1 bis 4, **dadurch gekennzeichnet, dass** der Widerstandswert ($R_d$) konstant oder zeitvariabel vorgegeben wird.

6.  Verfahren zum Betrieb einer Umrichterschaltung, wobei die Umrichterschaltung mindestens zwei Phasenbausteine (4) aufweist, jeder Phasenbaustein (4) ein erstes und ein zweites-Teilumrichtersystem (1, 2) aufweist und für jeden Phasenbaustein (4) die Teilumrichtersysteme (2) seriell miteinander verbunden sind, jedes Teilumrichtersystem (1, 2) mehrere in Serie geschaltete zweipolige Schaltzellen (3) umfasst und jede Schaltzelle (3) ansteuerbare bidirektionale Leistungshalbleiterschalter mit gesteuerter unidirektionaler Stromführungsrichtung und einen kapazitiven Energiespeicher aufweist,
    bei dem die Leistungshalbleiterschalter der Schaltzellen (3) des ersten Teilumrichtersystems (1) mittels eines Ansteuersignals (S1) und die Leistungshalbleiterschalter der Schaltzellen (3) des zweiten Teilumrichtersystems (2) mittels eines weiteren Ansteuersignals (S2) angesteuert werden,
    **dadurch gekennzeichnet,**
    **dass** für das erste Teilumrichtersystem (1) das Ansteuersignal (S1) aus einem in einer zentralen Berechnungseinheit (7) erzeugten Dämpfungsreferenzsignal ($V_{ref,d U1}$) bezüglich der Spannung (U1) über dem ersten Teilumrichtersystem (1) gebildet wird, wobei das Dämpfungsreferenzsignal ($V_{ref,d U1}$) bezüglich der Spannung (U1) über dem ersten Teilumrichtersystem (1) aus einem vorgebbaren Referenzstrom ($i_{ref, U1}$) durch das erste Teilumrichtersystem (1), aus einem vorgebbaren Widerstandswert ($R_{da}$) und aus einem Referenzsignal ($V_{ref, U1}$) bezüglich der Spannung (U1) über dem ersten Teilumrichtersystem (1) gebildet wird,
    **dass** für jede Schaltzelle (3) des ersten Teilumrichtersystem (1) eine lokale Berechnungseinheit (8) vorgesehen ist und das Dämpfungsreferenzsignal ($V_{ref,d U1}$) bezüglich der Spannung (U1) über dem ersten Teilumrichtersystem (1) an die lokalen Berechnungseinheiten (8) der Schaltzellen (3) des ersten Teilumrichtersystems (1) übermittelt wird,
    **dass** das Ansteuersignal (S1) in jeder lokalen Berechnungseinheit (8) der Schaltzellen (3) des ersten Teilumrichtersystems (1) zusätzlich aus einem Dämpfungssignal ($V_{d, Z1}$) bezüglich der zugehörigen Schaltzelle (3) des ersten Teilumrichtersystems (1) gebildet wird, wobei das Dämpfungssignal ($V_{d, Z1}$) aus einem gemessenen Strom (i1) durch die zugehörige Schaltzelle (3) des ersten Teilumrichtersystems (1) und einem vorgebbaren weiteren Widerstandswert ($R_{db}$) gebildet wird,
    **dass** für das zweite Teilumrichtersystem (2) das weitere Ansteuersignal (S2) aus einem in der zentralen Berechnungseinheit (9) erzeugten Dämpfungsreferenzsignal ($V_{ref,d U2}$) bezüglich der Spannung (U2) über dem zweiten Teilumrichtersystem (2) gebildet wird, wobei das Dämpfungsreferenzsignal ($V_{ref,d U2}$) bezüglich der Spannung (U2) über dem zweiten Teilumrichtersystem (2) aus einem vorgebbaren Referenzstrom ($i_{ref, U2}$) durch das zweite Teilumrichtersystem (2) aus dem vorgebbaren Widerstandswert ($R_{da}$) und aus einem Referenzsignal ($V_{ref, U2}$) bezüglich der Spannung (U2) über dem zweiten Teilumrichtersystem (1) gebildet wird,
    **dass** für jede Schaltzelle (3) des zweiten Teilumrichtersystem (2) eine lokale Berechnungseinheit (9) vorgesehen ist und das Dämpfungsreferenzsignal ($V_{ref,d U2}$) bezüglich der Spannung (U2) über dem zweiten Teilumrichtersystem (2) an die lokalen Berechnungseinheiten (9) der Schaltzellen (3) des zweiten Teilumrichtersystems (2) übermittelt wird,
    **dass** das weitere Ansteuersignal (S2) in jeder lokalen Berechnungseinheit (9) der Schaltzellen (3) des zweiten Teilumrichtersystems (2) zusätzlich aus einem Dämpfungssignal ($V_{d, Z2}$) bezüglich der zugehörigen Schaltzelle (3) des zweiten Teilumrichtersystems (2) gebildet wird, wobei das Dämpfungssignal ($V_{d, Z2}$) aus einem gemessenen Strom (i2) durch die zugehörige Schaltzelle (3) des zweiten Teilumrichtersystems (2) und dem vorgebbaren weiteren Widerstandswert ($R_{db}$) gebildet wird.

7.  Verfahren nach Anspruch 6, **dadurch gekennzeichnet, dass** der Widerstandswert ($R_{da}$) und der weitere Widerstandswert ($R_{db}$) konstant oder zeitvariabel vorgegeben wird.

**Claims**

1. Method for operation of a converter circuit, wherein the converter circuit has at least two phase modules (4), each phase module (4) has a first and a second sub-converter system (1, 2), and the sub-converter systems (1, 2) for each phase module (4) are connected in series with one another, each sub-converter system (1, 2) comprises a plurality of series-connected two-pole switching cells (3), and each switching cell (3) has controllable bidirectional power semiconductor switches with a controlled unidirectional current-flow direction and a capacitive energy store, in which the power semiconductor switches in the switching cells (3) in the first sub-converter system (1) are controlled by means of a control signal (S1), and the power semiconductor switches in the switching cells (3) in the second sub-converter system (2) are controlled by means of a further control signal (S2),
wherein the control signal (S1) for the first sub-converter system (1) is formed from a reference signal ($V_{ref, U1}$) with respect to the voltage (U1) across the first sub-converter system (1), and
wherein the further control signal (S2) for the second sub-converter system (2) is formed from a reference signal ($V_{ref, U2}$) with respect to the voltage (U2) across the second sub-converter system,
**characterized**
**in that** the control signal (S1) is additionally formed from a damping signal ($V_{d, U1}$) with respect to the first sub-converter system (1), wherein the damping signal ($V_{d, U1}$) is formed from a measured current (i1) through the first sub-converter system (1) and from a predeterminable resistance value ($R_d$), and
**in that** the further control signal (S2) is additionally formed from a damping signal ($V_{d, U2}$) with respect to the second sub-converter system (2), wherein the damping signal ($V_{d, U2}$) is formed from a measured current (i2) through the second sub-converter system (2) and from the predeterminable resistance value ($R_d$).

2. Method according to Claim 1, **characterized in that** the damping signal ($V_{d, U1}$) with respect to the first sub-converter system (1) is additionally formed from a predeterminable reference current ($I_{ref, U1}$) through the first sub-converter system (1), and **in that** the damping signal ($V_{d, U2}$) with respect to the second sub-converter system (2) is additionally formed from a predeterminable reference current ($I_{ref, U2}$) through the second sub-converter system (2).

3. Method for operation of a converter circuit, wherein the converter circuit has at least two phase modules (4), each phase module (4) has a first and a second sub-converter system (1, 2), and the sub-converter systems (1, 2) for each phase module (4) are connected in series with one another, each sub-converter system (1, 2) comprises a plurality of series-connected two-pole switching cells (3), and each switching cell (3) has controllable bidirectional power semiconductor switches with a controlled unidirectional current-flow direction and a capacitive energy store, in which the power semiconductor switches in the switching cells (3) in the first sub-converter system (1) are controlled by means of a control signal (S1), and the power semiconductor switches in the switching cells (3) in the second sub-converter system (2) are controlled by means of a further control signal (S2), **characterized**
**in that** the control signal (S1) for the first sub-converter system (1) is formed from a reference signal ($V_{ref, UZ1}$), which is produced in a central calculation unit (7), with respect to the respectively associated switching cell (3) in the first sub-converter system (1),
**in that** a local calculation unit (8) is provided for each switching cell (3) in the first sub-converter system (1), and the reference signal ($V_{ref, UZ1}$) with respect to the respectively associated switching cell (3) in the first sub-converter system (1) is transmitted to the respective local calculation unit (8) for the respective switching cell (3) in the first sub-converter system (1),
**in that** the control signal (S1) is additionally formed in each local calculation unit (8) for the switching cells (3) in the first sub-converter system (1) from a damping signal ($V_{d, Z1}$) with respect to the associated switching cell (3) in the first sub-converter system (1), wherein the damping signal ($V_{d, Z1}$) is formed from a measured current (i1) through the associated switching cell (3) in the first sub-converter system (1) and from a predeterminable resistance value ($R_d$),
**in that** the further control signal (S2) for the second sub-converter system (2) is formed from a reference signal ($V_{ref, UZ2}$), which is produced in the central calculation unit, with respect to the respectively associated switching cell (3) in the second sub-converter system (2),
**in that** a local calculation unit (9) is provided for each switching cell (3) in the second sub-converter system (2), and the reference signal ($V_{ref, UZ2}$) with respect to the associated switching cell (3) in the second sub-converter system (2) is transmitted to the respectively associated local calculation unit (9) for the respective switching cell (3) in the second sub-converter system (2),
**in that** the further control signal (S2) is additionally formed in each local calculation unit (9) for the switching cells (3) in the second sub-converter system (2) from a damping signal ($V_{d, Z2}$) with respect to the associated switching cell (3) in the second sub-converter system (2), wherein the damping signal ($V_{d, Z2}$) is formed from a measured current (i2) through the associated switching cell (3) in the second sub-converter system (2) and from the predeterminable resistance value ($R_d$).

4. Method according to Claim 3, **characterized in that** the respective damping signal ($V_{d, Z1}$) with respect to the associated switching cell (3) in the first sub-converter system (1) is additionally formed from a predeterminable reference current ($I_{ref, U1}$) through the associated switching cell (3) in the first sub-converter system (1), and **in that** the respective damping signal ($V_{d, Z2}$) with respect to the associated switching cell (3) in the second sub-converter system (2) is additionally formed from a predeterminable reference current ($I_{ref, U2}$) through the associated switching cell (3) in the second sub-converter system (2).

5. Method according to one of Claims 1 to 4, **characterized in that** the resistance value ($R_d$) is preset to be constant or variable over time.

6. Method for operation of a converter circuit, wherein the converter circuit has at least two phase modules (4), each phase module (4) has a first and a second sub-converter system (1, 2), and the sub-converter systems (2) for each phase module (4) are connected in series with one another, each sub-converter system (1, 2) comprises a plurality of series-connected two-pole switching cells (3), and each switching cell (3) has controllable bidirectional power semiconductor switches with a controlled unidirectional current-flow direction and a capacitive energy store,
in which the power semiconductor switches in the switching cells (3) in the first sub-converter system (1) are controlled by means of a control signal (S1), and the power semiconductor switches in the switching cells (3) in the second sub-converter system (2) are controlled by means of a further control signal (S2), **characterized in that** the control signal (S1) for the first sub-converter system (1) is formed from a damping reference signal ($V_{ref,d\ U1}$), which is produced in a central calculation unit (7), with respect to the voltage (U1) across the first sub-converter system (1),
wherein
the damping reference signal ($V_{ref,d\ U1}$) with respect to the voltage (U1) across the first sub-converter system (1) is formed from a predeterminable reference current ($i_{ref, U1}$) through the first sub-converter system (1), from a predeterminable resistance value ($R_{da}$) and from a reference signal ($V_{ref, U1}$) with respect to the voltage (U1) across the first sub-converter system (1),
**in that** a local calculation unit (8) is provided for each switching cell (3) in the first sub-converter system (1), and the damping reference signal ($V_{ref,d\ U1}$) with respect to the voltage (U1) across the first sub-converter system (1) is transmitted to the local calculation units (8) for the switching cells (3) in the first sub-converter system (1),
**in that** the control signal (S1) is additionally formed in each local calculation unit (8) for the switching cells (3) in the first sub-converter system (1) from a damping signal ($V_{d, Z1}$) with respect to the associated switching cell (3) in the first sub-converter system (1) , wherein the damping signal ($V_{d, Z1}$) is formed from a measured current (i1) through the associated switching cell (3) in the first sub-converter system (1) and from a predeterminable further resistance value ($R_{db}$),
**in that** the further control signal (S2) for the second sub-converter system (2) is formed from a damping reference signal ($V_{ref,d\ U2}$), which is produced in the central calculation unit (9), with respect to the voltage (U2) across the second sub-converter system (2), wherein the damping reference signal ($V_{ref,d\ U2}$) with respect to the voltage (U2) across the second sub-converter system (2) is formed from a predeterminable reference current ($i_{ref, U2}$) through the second sub-converter system (2), from the predeterminable resistance value ($R_{da}$) and from a reference signal ($V_{ref, U2}$) with respect to the voltage (U2) across the second sub-converter system (2),
**in that** a local calculation unit (9) is provided for each switching cell (3) in the second sub-converter system (2), and the damping reference signal ($V_{ref,d\ U2}$) with respect to the voltage (U2) across the second sub-converter system (2) is transmitted to the local calculation units (9) for the switching cells (3) in the second sub-converter system (2),
**in that** the further control signal (S2) is additionally formed in each local calculation unit (9) for the switching cells (3) in the second sub-converter system (2) from a damping signal ($V_{d, Z2}$) with respect to the associated switching cell (3) in the second sub-converter system (2), wherein the damping signal ($V_{d, Z2}$) is formed from a measured current (i2) through the associated switching cell (3) in the second sub-converter system (2) and from the predeterminable further resistance value ($R_{db}$).

7. Method according to Claim 6, **characterized in that** the resistance value ($R_{da}$) and the further resistance value ($R_{db}$) are predetermined to be constant or variable over time.

**Revendications**

1. Procédé de mise en fonctionnement d'un convertisseur, dans lequel le convertisseur comporte au moins deux modules de phase (4), chaque module de phase (4) comporte un premier et un second sous-systèmes convertisseurs (1, 2) et, pour chaque module de phase (4), les sous-systèmes convertisseurs (1, 2) sont connectés l'un à l'autre en série, chaque sous-système convertisseur (1, 2) comprend plusieurs cellules de commutation bipolaires (3) connectées en série et chaque cellule de commutation (3) comporte des commutateurs à semi-conducteur de puissance bidirectionnels commandables ayant un sens de conduction unidirectionnel commandé et un dispositif de stockage d'énergie capacitif,

dans lequel les commutateurs à semi-conducteurs de puissance des cellules de commutation (3) du premier sous-système convertisseur (1) sont commandés au moyen d'un signal de commande (S1) et les commutateurs à semi-conducteur de puissance des cellules de commutation (3) du second sous-système convertisseur (2) sont commandés au moyen d'un autre signal de commande (S2),

dans lequel, pour le premier sous-système convertisseur (1), le signal de commande (S1) est constitué d'un signal de référence ($V_{ref, U1}$) relatif à la tension (U1) aux bornes du premier sous-système convertisseur (1), et

dans lequel, pour le second sous-système convertisseur (2), l'autre signal de commande (S2) est constitué d'un signal de référence ($V_{ref, U2}$) relatif à la tension (U2) aux bornes du second sous-système convertisseur (2), **caractérisé en ce que**

le signal de commande (S1) est en outre constitué d'un signal d'amortissement ($V_{d, U1}$) relatif au premier sous-système convertisseur (1), dans lequel le signal d'amortissement ($V_{d, U1}$) est constitué d'un courant mesuré (i1) à travers le premier sous-système convertisseur (1) et d'une valeur de résistance prédéterminée ($R_d$), et **en ce que** l'autre signal de commande (S2) est en outre constitué d'un signal d'amortissement ($V_{d, U2}$) relatif au second sous-système convertisseur (2), dans lequel le signal d'amortissement ($V_{d, U2}$) est constitué d'un courant mesuré (i2) à travers le second sous-système convertisseur (2) et la valeur de résistance prédéterminée ($R_d$).

2. Procédé selon la revendication 1, **caractérisé en ce que** le signal d'amortissement ($V_{d, U1}$) relatif au premier sous-système convertisseur (1) est en outre constitué d'un courant de référence prédéterminable ($I_{ref, U1}$) à travers le premier sous-système convertisseur (1), et

**en ce que** le signal d'amortissement ($V_{d, U2}$) relatif au second sous-système convertisseur (2) est en outre constitué d'un courant de référence prédéterminable ($I_{ref, U2}$) à travers le second sous-système convertisseur (2).

3. Procédé de mise en fonctionnement d'un convertisseur, dans lequel le convertisseur comporte au moins deux modules de phase (4), chaque module de phase (4) comporte un premier et un second sous-systèmes convertisseurs (1, 2) et, pour chaque module de phase (4), les sous-systèmes convertisseurs (1, 2) sont connectés l'un à l'autre en série, chaque sous-système convertisseur (1, 2) comprend plusieurs cellules de commutation bipolaires (3) connectées en série et chaque cellule de commutation (3) comporte des commutateurs à semi-conducteur de puissance bidirectionnels commandables ayant un sens de conduction de courant unidirectionnel commandé et un dispositif de stockage d'énergie capacitif,

dans lequel les commutateurs à semi-conducteurs de puissance des cellules de commutation (3) du premier sous-système convertisseur (1) sont commandés au moyen d'un signal de commande (S1) et les commutateurs à semi-conducteur de puissance des cellules de commutation (3) du second sous-système convertisseur (2) sont commandés au moyen d'un autre signal de commande (S2),

**caractérisé en ce que**,

pour le premier sous-système convertisseur (1), le signal de commande (S1) est constitué d'un signal de référence ($V_{ref, UZ1}$) généré par une unité de calcul centrale (7) relativement à la cellule de commutation (3) respective correspondante du premier sous-système convertisseur (1),

**en ce que**, pour chaque cellule de commutation (3) du premier sous-système convertisseur (1), une unité de calcul locale (8) est prévue et le signal de référence ($V_{ref, UZ1}$) relatif à la cellule de commutation respective correspondante (3) du premier sous-système convertisseur (1) est transmis à l'unité de calcul locale respective correspondante (8) de la cellule de commutation respective (3) du premier sous-système convertisseur (1),

**en ce que** le signal de commande (S1), dans chaque unité de calcul locale (8) des cellules de commutation (3) du premier sous-système convertisseur (1) est en outre constitué d'un signal d'amortissement ($V_{d, Z1}$) relatif à la cellule de commutation correspondante (3) du premier sous-système convertisseur (1), dans lequel le signal d'amortissement ($V_{d, Z1}$) est constitué d'un courant mesuré (i1) à travers la cellule de commutation correspondante (3) du premier sous-système convertisseur (1) et d'une valeur de résistance prédéterminée ($R_d$),

**en ce que**, pour le second sous-système convertisseur (2), l'autre signal de commande (S2) est constitué d'un signal de référence ($V_{ref, UZ2}$) généré dans l'unité de calcul centrale (7) relativement à la cellule de commutation respective correspondante (3) du second sous-système convertisseur (2),

**en ce que** pour chaque cellule de commutation (3) du second sous-système convertisseur (2), une unité de calcul locale (9) est prévue et le signal de référence ($V_{ref, UZ2}$) relatif à la cellule de commutation correspondante (3) du second sous-système convertisseur (2) est transmis à l'unité de calcul locale respective correspondante (9) de la cellule de commutation respective (3) du second sous-système convertisseur (2),
**en ce que** l'autre signal de commande (S2), dans chaque unité de calcul locale (9) des cellules de commutation (3) du second sous-système convertisseur (2) est en outre constitué d'un signal d'amortissement ($V_{d,\,Z2}$) relatif à la cellule de commutation correspondante (3) du second sous-système convertisseur (2), dans lequel le signal d'amortissement ($V_{d,\,Z2}$) est constitué d'un courant mesuré ($i2$) à travers la cellule de commutation correspondante (3) du second sous-système convertisseur (2) et de la valeur de résistance prédéterminable ($R_d$).

4. Procédé selon la revendication 3, **caractérisé en ce que** le signal d'amortissement respectif ($V_{d,\,Z1}$) relatif à la cellule de commutation correspondante (3) du premier sous-système convertisseur (1) est en outre constitué d'un courant de référence prédéterminable ($I_{ref,\,U1}$) à travers la cellule de commutation correspondante (3) du premier sous-système convertisseur (1), et **en ce que** le signal d'amortissement respectif ($V_{d,\,Z2}$) relatif à la cellule de commutation correspondante (3) du second sous-système convertisseur (2) est en outre constitué d'un courant de référence prédéterminé ($I_{ref,\,U2}$) à travers la cellule de commutation correspondante (3) du second sous-système convertisseur (2).

5. Procédé selon l'une quelconque des revendications 1 à 4, **caractérisé en ce que** la valeur de résistance ($R_d$) est prédéterminée à une valeur constante ou variable dans le temps.

6. Procédé de mise en fonctionnement d'un convertisseur, dans lequel le convertisseur comporte au moins deux modules de phase (4), chaque module de phase (4) comporte un premier et un second sous-systèmes convertisseurs (1, 2) et, pour chaque module de phase (4), les sous-systèmes convertisseurs (2) sont connectés l'un à l'autre en série, chaque sous-système convertisseur (1, 2) comprend plusieurs cellules de commutation bipolaires connectées en série (3) et chaque cellule de commutation (3) comporte des commutateurs à semi-conducteur de puissance bidirectionnels commandables ayant un sens de conduction unidirectionnel commandé et un dispositif de stockage d'énergie capacitif,
dans lequel les commutateurs à semi-conducteur de puissance des cellules de commutation (3) du premier sous-système convertisseur (1) sont commandés au moyen d'un signal de commande (S1) et les commutateurs à semi-conducteur de puissance des cellules de commutation (3) du second sous-système convertisseur (2) sont commandés au moyen d'un autre signal de commande (S2),
**caractérisé en ce que**
pour le premier sous-système convertisseur (1), le signal de commande (S1) est constitué d'un signal de référence d'amortissement ($V_{ref,d\,U1}$) généré dans une unité de calcul centrale (7) relatif à la tension (U1) aux bornes du premier sous-système convertisseur (1), dans lequel le signal de référence d'amortissement ($V_{ref,d\,U1}$) relatif à la tension (U1) aux bornes du premier sous-système convertisseur (1) est constitué d'un courant de référence prédéterminable ($i_{ref,\,U1}$) à travers le premier sous-système convertisseur (1), d'une valeur de résistance prédéterminable ($R_{da}$) et d'un signal de référence ($V_{ref,\,U1}$) relatif à la tension (U1) aux bornes du premier sous-système convertisseur (1), **en ce que**, pour chaque cellule de commutation (3) du premier sous-système convertisseur (1), une unité de calcul locale (8) est prévue et le signal de référence d'amortissement ($V_{ref,d\,U1}$) relatif à la tension (U1) aux bornes du premier sous-système convertisseur (1) est transmis aux unités de calcul locales (8) des cellules de commutation (3) du premier sous-système convertisseur (1),
**en ce que** le signal de commande (S1), dans chaque unité de calcul locale (8) des cellules de commutation (3) du premier sous-système convertisseur (1) est en outre constitué d'un signal d'amortissement ($V_{d,\,Z1}$) relatif à la cellule de commutation correspondante (3) du premier sous-système convertisseur (1), dans lequel le signal d'amortissement ($V_{d,\,Z1}$) est constitué d'un courant mesuré ($i1$) à travers la cellule de commutation correspondante (3) du premier sous-système convertisseur (1) et d'une autre valeur de résistance prédéterminable ($R_{db}$),
**en ce que**, pour le second sous-système convertisseur (2), l'autre signal de commande (S2) est constitué d'un signal de référence d'amortissement ($V_{ref,d\,U2}$) généré dans l'unité de calcul centrale (9) relativement à la tension (U2) aux bornes du second sous-système convertisseur (2), dans lequel le signal de référence d'amortissement ($V_{ref,d\,U2}$) relatif à la tension (U2) aux bornes du second sous-système convertisseur (2) est constitué d'un courant de référence prédéterminable ($i_{ref,\,U2}$) à travers le second sous-système convertisseur (2), de la valeur de résistance prédéterminable ($R_{da}$) et d'un signal de référence ($V_{ref,\,U2}$) relatif à la tension (U2) aux bornes du second sous-système convertisseur (2),
**en ce que**, pour chaque cellule de commutation (3) du second sous-système convertisseur (2), une unité de calcul locale (9) est prévue et le signal de référence d'amortissement ($V_{ref,d\,U2}$) relatif à la tension (U2) aux bornes du second sous-système convertisseur (2), est transmis aux unités de calcul locales (9) des cellules de commutation (3) du second sous-système convertisseur (2),
**en ce qu'**un autre signal de commande (S2), dans chaque unité de calcul locale (9) des cellules de commutation (3) du second sous-système convertisseur (2) est en outre constitué d'un signal d'amortissement ($V_{d,\,Z2}$) relatif à la cellule de commutation correspondante (3) du second sous-système convertisseur (2), dans lequel le signal d'amortissement ($V_{d,\,Z2}$) est constitué d'un courant mesuré (i2) à travers la cellule de commutation correspondante (3) du second sous-système convertisseur (2) et de l'autre valeur de résistance prédéterminable ($R_{db}$).

7.  Procédé selon la revendication 6, **caractérisé en ce que** la valeur de résistance ($R_{da}$) et l'autre valeur de résistance ($R_{db}$) sont prédéterminées à des valeurs constantes ou variables dans le temps.

Stand der Technik

**Fig. 1**

**Fig. 2**

**Fig. 3**

Fig. 4

**Fig. 5**

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007023064 A1
- WO 2007133852 A2
- WO 200733852 A2
- WO 2008067784 A1

**In der Beschreibung aufgeführte Nicht-Patentliteratur**

- **A. Antonopoulos et al.** On dynamics and voltage control of the Modular Multilevel Converter. *IPE,* 2009